# EUROPEAN PATENT APPLICATION

(11) **EP 4 650 429 A1**
(43) Date of publication of application: **19.11.2025**
(21) Application number: 25175658.1
(22) Date of filing: 12.05.2025
(51) Int. Cl.: C12G 1/02, C12G 1/022

(54) **METHOD FOR SOLUBILIZING AND DISPERSING SUBSTANCES IN BEVERAGES DESIGNED TO UNDERGO ALCOHOLIC FERMENTATION REACTIONS**

(30) Priority: 14.05.2024 IT 202400010813
(71) Applicant: Coppini, Alessandro, 46100 Mantova (MN) (IT); Fruner, Flavio, 36030 Costabissara (VI) (IT)
(72) Inventor: Coppini, Alessandro, 46100 Mantova (MN) (IT); Fruner, Flavio, 36030 Costabissara (VI) (IT)
(74) Representative: Dragotti & Associati S.P.A.

(57) **Abstract**

Method for solubilizing and dispersing substances in beverages designed to undergo alcoholic fermentation reactions, the method comprising a step i) of arranging the beverage in a containment space, a step ii) of arranging a predetermined weight amount of at least one substance to be solubilized and dispersed, and a step iii) of solubilizing and dispersing the predetermined weight amount of the at least one substance in the beverage. Step iii) is performed by preparing the predetermined weight amount of the at least one substance inside at least one container element (10) and keeping the at least one container element (10) immersed in the beverage. The at least one container element (10) comprises walls (12) which delimit an internal cavity (14) and have pores with predetermined sizes designed to allow the at least one solubilized substance to pass from the internal cavity (14) into the volume of the beverage.

## Description

The present invention relates to the technical field for the production of alcoholic beverages, in particular the wine-making field, and concerns a method for solubilizing and dispersing substances in beverages designed to undergo alcoholic fermentation reactions, in particular in must or wine. From the prior art it is known to solubilize one or more substances in beverages designed to undergo alcoholic fermentation reactions, both before, during and after fermentation.

In particular, the substances may be solubilized in the must or in the wine during the must fermentation process or during the wine maturation process.

In the context of the present description, the substances to be solubilized are also identified by the term "solutes" and the beverages are also identified by the term "solvents".

These substances to be solubilized may comprise fermentation activators or nutrients for the yeasts, such as ammonium biphosphate and yeast autolysate, to be used during the fermentation process, or stabilizing adjuvants or additives to be used during the maturation process.

Moreover, these substances are generally in the form of granules or powders and have a variable particle size.

Generally, the solubilization and dispersion process involves a step of adding a predetermined weight amount of such substances in the beverages contained in a suitable containment space, such as the space delimited by a basin, a cistern or a tank.

The weight amount of substance to be added varies depending on the properties of the substance, the volume of the beverages and the organoleptic properties and the aromatic profile of the beverages which are to be obtained at the end of the alcoholic fermentation process.

The addition step may be preceded by a preliminary step in which the predetermined weight amount of substance is solubilized and dispersed in a small amount of solvent, this amount being then added to the beverage intended to undergo fermentation or maturation.

Moreover, the addition step may be followed by a beverage stirring or mixing step in order to promote further the solubilization and dispersion of the substance or substances.

Therefore, in the known methods, the step of adding the substance or substances is essentially performed in a single moment.

A first drawback of the aforementioned technical solutions consists in the fact that these operating methods, in particular during the fermentation process, often are not compatible with the nutritional requirements of the yeasts which are responsible for the alcoholic fermentation reactions.

In fact, the addition of the substances in a single moment results in instantaneous solubilization peaks and the consequent immediate availability in the beverage volume of a large amount of substances for the yeasts.

This drawback may result in an alteration of the fermentation kinetics and consequently alteration of the organoleptic properties of the beverage, in particular of wine, at the end of the alcoholic fermentation process.

For example, the immediate solubilization and dispersion of the entire weight amount of a substance may result in significant variations of the pH, the redox potential and the quantity of amine, ammonia or molecular nitrogen readily available in the must or wine and this results in an alteration of the aromatic profile of the wine.

A further drawback consists in the fact that the immediate solubilization and dispersion of the substances generally cause an acceleration of the fermentation kinetics of the beverage and consequently a sudden increase in the temperature of the beverage.

This drawback results in a greater use of cold energy in order to keep stable the temperature of the beverage at values considered to be ideal for the fermentation kinetics of the yeasts.

Another drawback of the aforementioned technical solutions consists in the fact that a particularly rapid alcoholic fermentation reaction is associated with an excessive increase in biomass, i.e. of fermenting yeasts.

This excessive increase in biomass involves nutritional requirements which cannot be supported by the fermentation medium, with consequent stoppage or slowing down of the fermentation reaction as well as an increase in undesirable secondary compounds, such as acetaldehyde and pyruvic acid, which result in a deterioration in the quality of the wine and greater use of sulphur dioxide, an allergen which wine-making technology and the market tendencies increasingly tend to reduce.

Consequently, the organoleptic profile of the beverage, in particular of wine, has a lower quality owing to the reduced enzymatic effect of the yeasts and the reduced anabolism of the aromatic precursors.

In order to overcome at least partially the aforementioned drawbacks it is possible to envisage adding predetermined weight amounts of substance in the beverages at regular time intervals.

However, this method is particularly uneconomical and inefficient and is unable to eliminate completely the instantaneous solubilization and dispersion peaks of the substances.

Therefore, such a method is able to limit only partially the alteration of the fermentation kinetics, the organoleptic properties and the aromatic profile of the beverage, in particular of wine.

The main object of the present invention is to provide a method for solubilizing and dispersing substances in beverages designed to under alcoholic fermentation reactions, in particular in must or wine, which is able to overcome the aforementioned drawbacks.

A particular task of the present invention is to provide a method of the type described above which allows the gradual solubilization and dispersion of the substances in the beverages within predefined time intervals.

A further task of the present invention is to provide a method of the type described above which limits the alterations of the aromatic profile, the organoleptic properties, the redox potential and the pH of the beverages intended to undergo alcoholic fermentation reactions.

Another task of the present invention is to provide a method of the type described above which is able to optimize the fermentation kinetics and the metabolism of the yeasts, while increasing the technical and economic sustainability of the beverages intended to undergo the alcoholic fermentation reactions.

A further task of the present invention is to provide a method of the type described above which allows definition of the dispersion and release times of the substances in the beverages, certain operating conditions being known.

The object and main tasks described above are achieved with a method for solubilizing and dispersing substances in beverages designed to undergo alcoholic fermentation reactions according to Claim 1.

In order to illustrate more clearly the innovative principles of the present invention and its advantages compared to the prior art, an example of embodiment of at least one container element used in the method according to the present invention, as well as graphs illustrating the fermentation kinetics of the beverage during solubilization and dispersion of the substances, will be described below with the aid of the attached figures. In particular:
- Figures 1 and 2 show top plan views of a container element used in the method according to the present invention in a closed configuration and open configuration in accordance with a first embodiment;
- Figure 3 is a perspective view of the container element according to Figures 1 and 2;
- Figure 4 is a side view of the container element according to the preceding figures;
- Figure 5 is a perspective view of a container element used in the method according to the present invention in accordance with a second embodiment;
- Figure 6 is a graph showing the progression over time of three solubilization and dispersion profiles - for which different operating conditions have been used - of a substance in a beverage in accordance with the method of the present invention;
- Figure 7 is a graph showing the progression of the pH values measured at successive moments for three different type of wine during the fermentation process;
- Figures 8a-8c are graphs showing the progression of the fermentation kinetics with reference, respectively, to the concentration of sugars, the concentration of amine molecular nitrogen and the concentration of ammonia nitrogen for the three types of wine shown in the graph of Figure 6 during the fermentation process;
- Figures 9a is a graph showing the variation in the redox potential over time of a beverage during the fermentation process in which the method according to the present invention was implemented;
- Figures 9b is a graph showing the variation in the redox potential over time of the beverage shown in the graph of Figure 8a during the fermentation process in which the method according to the present invention was not implemented.

The present description, provided only by way of a non-limiting example of the scope of protection of the invention, relates to a method for solubilizing and dispersing substances in beverages designed to undergo alcoholic fermentation reactions, in particular in must or wine.

Advantageously, the method according to the present invention may be used before, during or after the beverage fermentation process.

In particular, the method according to the present invention may be used during the fermentation process of must or during the maturation process of wine.

In accordance with a preferred embodiment of the invention, the method comprises the following steps:
i) arranging a beverage in a containment space;
ii) arranging a predetermined weight amount of at least one substance to be solubilized or dispersed;
iii) solubilizing and dispersing the predetermined weight amount of the at least one substance in the beverage.

As already mentioned, in the context of the present description, the at least one substance to be solubilized and dispersed may also be defined "solute" and the beverage, in particular the must or wine, may also be defined "solvent".

In a manner known per se, the containment space for the beverage consists of a cistern, a basin, an autoclave or a tank.

Moreover, the weight amount of the at least one substance to be solubilized and dispersed is chosen at least depending on the amount/volume of beverage provided in the containment space.

Conveniently, the at least one substance is chosen from the group comprising ammonium salts, such as ammonium biphosphate, yeast autolysates, tannins and vegetable polysaccharides.

However, the at least one substance may also consist of compounds different from the compounds indicated above and generally used during the beverage fermentation processes, in particular during the fermentation of must and/or the maturation of wine, without thereby departing from the scope of protection of the present invention.

The method may also envisage the solubilization and the dispersion of several substances simultaneously or at different moments, in accordance with the operating modes described below.

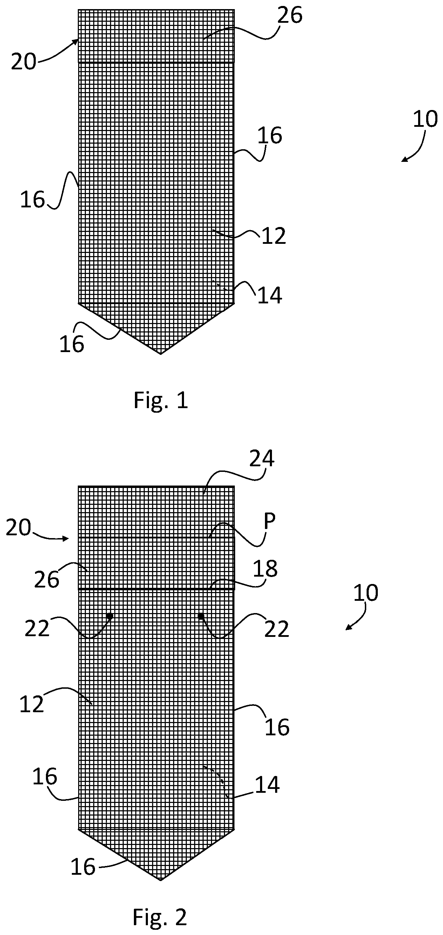

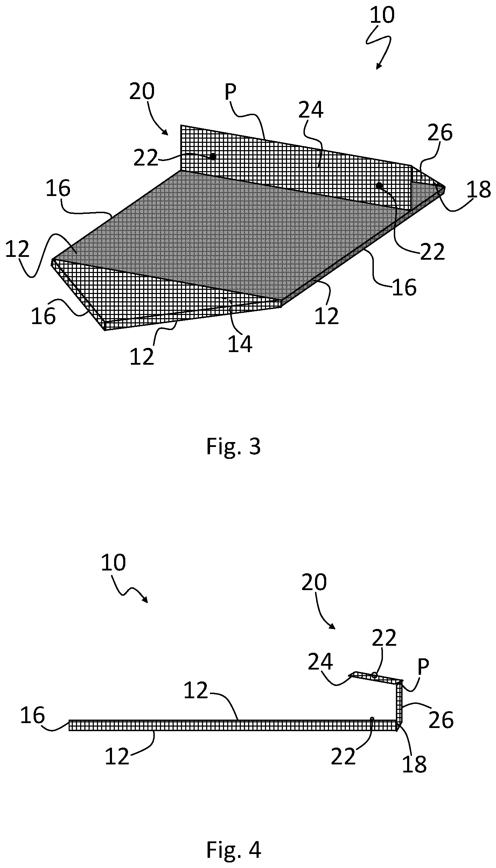

According to a particular aspect of the invention, step iii) of solubilizing and dispersing the at least one substance is performed by arranging the weight amount of the at least one substance inside the at least one container element 10, of the type shown in Figures 1-5, and keeping said at least one container element 10 immersed in the beverage for a predetermined time period.

Moreover, the at least one container element 10 comprises walls 12 which delimit an internal cavity 14 and have pores with a predetermined size designed to allow the at least one solubilized substance to pass from the internal cavity 14 into the volume of the beverage.

As can be seen more clearly in Figures 1-4 and in accordance with a first embodiment, the at least one container element 10 may consist of a closable bag, preferably with a rectangular shape.

Said container element 10 has a series of stitches along three sides 16 and an opening 18, formed on one side without stitches, for introducing and arranging the at least one substance inside the internal cavity 14.

The opening 18 is intended to be selectively closed by means of a folding flap 20 comprising respective coupling means 22 intended to interact with coupling means 22 provided on one of the walls 12 of the body of the container element 10.

As schematically shown in Figures 1-4, the coupling means 22 comprise preferably press buttons; alternatively, the coupling means 22 may also be of the Velcro type, without thereby departing from the scope of protection of the present invention.

The flap 20 preferably comprises a pair of portions 24, 26 which are joined together, namely stitched, along a respective folding line P; moreover, one of the portions 24 is stitched to the body of the container element 10 along the opening 18 and the other portion 26 comprises the coupling means 22. Figures 1 and 2 show, respectively, the bag 10 in the closed configuration and in the open configuration.

The bag 10 may also have a form different from that shown in the figures, without thereby departing from the scope of protection of the present invention.

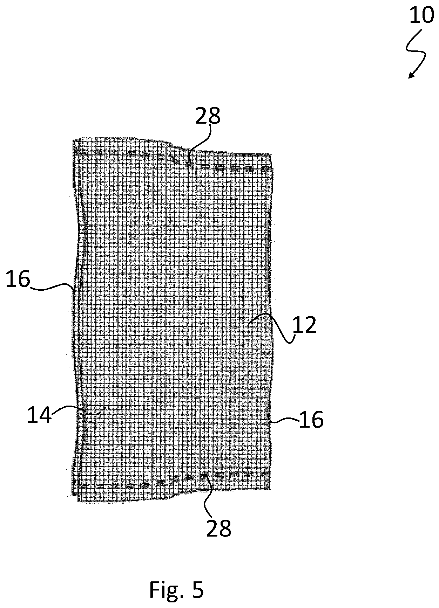

For example, as shown in Figure 5 with reference to a second alternative embodiment, the container element 10 may consist of a bag having, at the longitudinal ends, respective electro-welds or stitches 28 for permanent closure thereof.

If several substances are to be solubilized and dispersed in the beverage as indicated above, the method may envisage the use of several immersion bags, each containing a different substance, or a single bag having several compartments each intended to contain a different substance.

Moreover, the sizes of the sides of the bag 10 may vary from 5 cm x 10 cm to 1 m x 2 m.

The at least one substance is arranged inside the bag 10 preferably in the form of a powder or granules with a predetermined particle size; in this respect, the method may also envisage a step of hydrating the at least one substance, namely the powder or the granules, with a predetermined amount of solvent before step ii), namely before the introduction of the weight amount of the at least one substance inside the internal cavity 14 of the container element 10.

Preferably, the walls 12 of the at least one container element 10, namely the bag, are made of a material chosen within the group comprising felt, polymer materials, fabrics and sintered metals.

In particular, the polymer materials of the wall 12 of the at least one container element 10 may be chosen within the group comprising polypropylene, polyester, polyethersulfone and nylon, while the sintered metals may consist of a sintered metal membrane.

Advantageously, the sizes of the pores of the walls range between 0.1 µm and 100 µm and even more preferably between 1 µm and 20 µm.

The materials of the walls 12 and the predetermined size of the pores indicated above allow initially the beverage to pass into the internal cavitiy 14 of the bag 10, in order to solubilize the at least one substance contained inside it, and then the solubilized substance to pass into and be dispersed in the volume of beverage by means of gradient diffusion.

As a result of this arrangement it is possible to disperse and release the at least one substance in the beverage within a predefined time interval, taking into account the nutritional requirements of the yeasts during the fermentation process.

Advantageously, the method may comprise a prior step of selecting the size of the pores and/or the material of the walls 12 of the at least one container element 10 depending on certain operating conditions such as:
- the type and/or particle size of the at least one substance to be solubilized and dispersed; and/or
- the temperature of the beverage and/or volume of beverage in which the substance is to be solubilized; and/or
- the predefined time interval for dispersion and release of the at least one substance in the beverage.

This latter step is made possible by performing beforehand test solubilization and dispersion procedures in which the material and the pore sizes of the at least one container element 10, the volume and the temperature of the beverage intended to undergo the fermentation reaction, as well as the type, the weight amount and the particle size of the substance to be solubilized, are known.

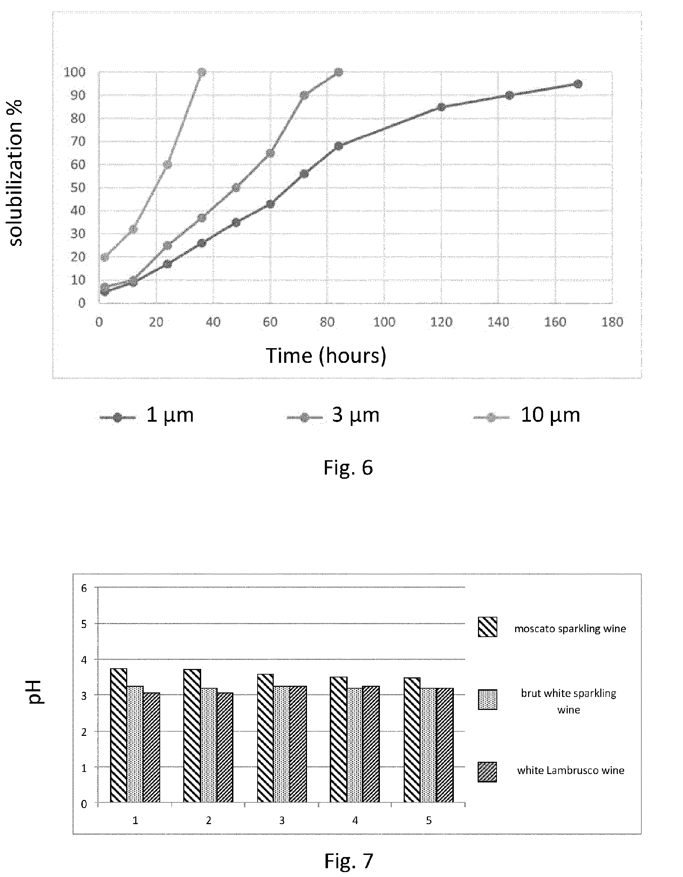

In these test procedures, the solubilization percentage of the substance with respect to the initial overall weight amount to be solubilized is detected at predefined time intervals until the substance is completely solubilized. The results of these test procedures may be expressed in the form of graphs, such as that shown in Figure 6. This latter figure shows three different solubilization profiles of ammonium biphosphate with three different pore sizes of the walls 12 of the container element 10, namely 1 µm, 3 µm and 10 µm.

From this graph it can be seen that, for the same material of the container element 10 and of substance to be solubilized, the variation in the pore sizes allows the time interval for dispersion and release of the ammonium biphosphate to be determined beforehand, from a minimum of about 40 hours for the larger pore sizes up to a maximum of more than 160 hours for the smaller pore sizes.

Conveniently, the at least one container element 10 may be fastened to a fixed support, not shown in the attached drawings, while being kept immersed, for example by means of a cord compatible with the foodstuffs; said support may be provided for example inside a basin or a cistern or an autoclave in which the beverage has been arranged.

From the above description it is now clear how the method according to the present invention for solubilizing and dispersing substances in beverages designed to undergo alcoholic fermentation reactions is able to achieve advantageously the predefined objects.

In particular, the use of the at least one container element of the type described above for immersion in the beverages allows the gradual dispersion and release of the substance or substances within a predefined time interval which can be selected beforehand by varying the material of the at least one container element and/or the pore sizes of the walls.

The gradual solubilization and dispersion of the substances are able to prevent the alteration of the organoleptic properties, the aromatic profile, the pH and the redox potential of the beverage, which would otherwise occur if the same weight amounts of the said substances were to be dispersed in a single moment.

Moreover, the use of the at least one container element during immersion for solubilization and dispersion of the substances is able to keep the levels of both amine and ammonia molecular nitrogen readily comparable to the levels considered adequate from a regulatory point of view.

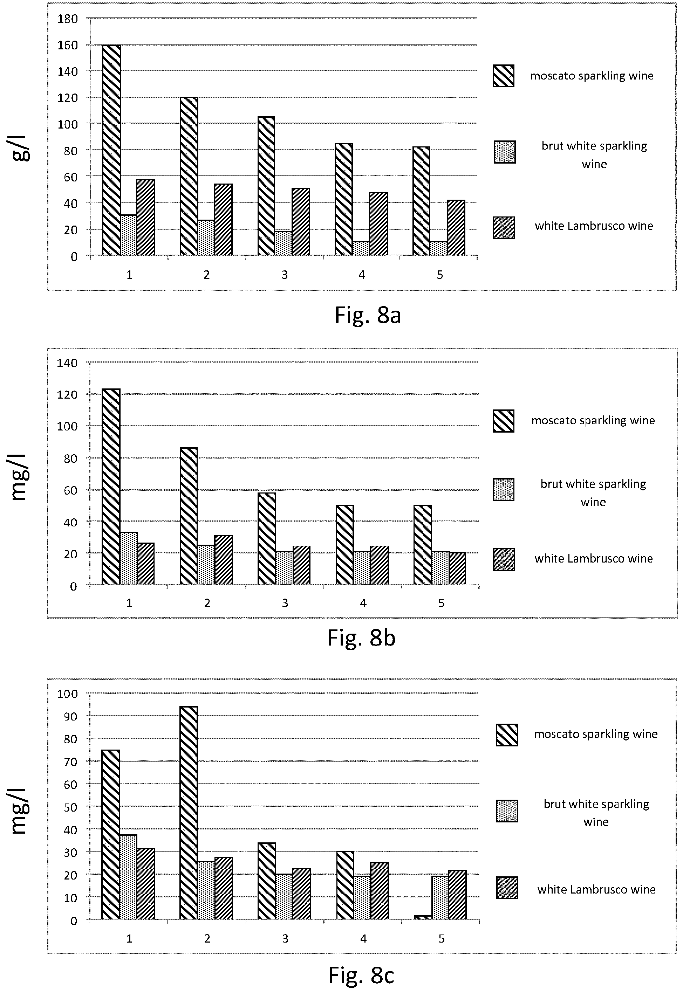

The aforementioned advantages are also evident from the graphs shown in Figures 7 and 8a-8c, which show respectively the progression of the pH and of fermentation kinetic (with reference to the concentration of sugars, amine and ammonia molecular nitrogen) for three different types of wine, namely Moscato sparkling wine, brut white sparkling wine and Lambrusco white wine, and at different moments in the fermentation process.

The pH values and the concentrations of sugars, amine molecular nitrogen and ammonia nitrogen are detected, using instruments known in the field, at five different successive moments, corresponding to the numbers shown along the x-axis of the graphs, during the wine fermentation process.

As can be noted from the graphs, the gradual solubilization and dispersion of the substances in the wines allows the pH to be kept within a limited range of values and favours the gradual consumption, by the yeasts, of the sugars, the amine nitrogen and the ammonia nitrogen present in the wines. Below, Tables I-V show the pH values and concentrations of sugars, amine nitrogen and ammonia nitrogen referred to Figures 7 and 8a-8c, respectively.

**Table I - pH**

| Phase | Moscato sparkling wine | Brut white sparkling wine | Lambrusco white wine |
|---|---|---|---|
| 1 | 3.75 | 3.24 | 3.07 |
| 2 | 3.73 | 3.2 | 3.06 |
| 3 | 3.6 | 3.24 | 3.24 |
| 4 | 3.5 | 3.2 | 3.26 |
| 5 | 3.48 | 3.2 | 3.19 |

**Table II - concentration of sugars (g/l)**

| Phase | Moscato sparkling wine | Brut white sparkling wine | Lambrusco white wine |
|---|---|---|---|
| 1 | 159.53 | 30.85 | 57.5 |
| 2 | 119.69 | 27.1 | 54.29 |
| 3 | 105.55 | 18.4 | 50.89 |
| 4 | 84.8 | 10.4 | 47.86 |
| 5 | 82.33 | 10.4 | 41.72 |

**Table III - concentration of amine nitrogen (mg/l)**

| Phase | Moscato sparkling wine | Brut white sparkling wine | Lambrusco white wine |
|---|---|---|---|
| 1 | 123 | 33.21 | 26.68 |
| 2 | 86 | 24.96 | 30.97 |
| 3 | 58 | 21.18 | 24.57 |
| 4 | 50 | 20.91 | 24.55 |
| 5 | 50 | 20.91 | 20 |

**Table IV - concentration of ammonia nitrogen (mg/l)**

| Phase | Moscato sparkling wine | Brut white sparkling wine | Lambrusco white wine |
|---|---|---|---|
| 1 | 75 | 37.68 | 31.26 |
| 2 | 94 | 25.87 | 27.75 |
| 3 | 34 | 20.23 | 22.86 |
| 4 | 30 | 19.42 | 25.19 |
| 5 | 2 | 19.42 | 22 |

Advantageously, the gradual dispersion of the substance or substances also avoids the creation in the beverage of a reduction environment in terms of redox potential which alters the aromatic profile of the beverage, in particular of wine.

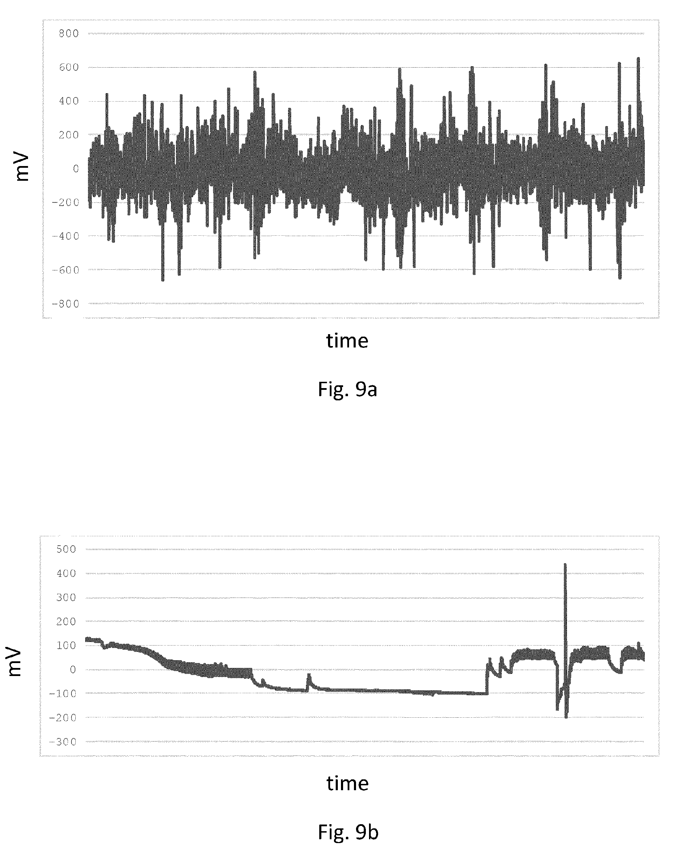

This advantage is visible the graphs of Figures 9a and 9b, showing a comparison between the progression of the redox potentials (detected by means of a redox probe known in the field) in a Lambrusco white wine in which the method according to the present invention was used and in a Lambrusco red wine in which the method according to the present invention was not used.

These tests were conducted solubilizing a weight amount of substance equal to 6 kg in volumes of wine equal to 300 hl during respective processes of refermentation of the wine kept at a temperature of 18°C. From this comparison it can be seen that:
- the gradual solubilization and dispersion of the substances in the wine results in a rectilinear progression of the redox potential which moves with positive and negative oscillations (Figure 8a), since the probe detects the release of the basic salts which cause oscillations;
- the immediate solubilization and dispersion of the substances results in a progression of the redox potential which follows a descending curve, thus reflecting the tendency of the wine to move towards potential negative redox potential values where the wine is in a reduction state.

The use of the at least one container element for solubilizing and dispersing the substances also has the following results:
- a reduction in the consumption of cold energy needed to keep the temperature of the beverage stable;
- the total acidity and volatile acidity values are kept stable during the processes for fermentation of the beverage, in particular of the must for obtaining wine;
- an operator is not required to intervene periodically in order to add weight amounts of substance into the beverage before and/or during and/or after the fermentation process.

Obviously, the above description of embodiments applying the innovative principles of the present invention is provided by way of example of these innovative principles and must therefore not be regarded as limiting the scope of the rights claimed herein.

## Claims

1. Method for solubilizing and dispersing substances in beverages designed to undergo alcoholic fermentation reactions, the method comprising the following steps:
i) arranging a beverage in a containment space;
ii) arranging a predetermined weight amount of at least one substance to be solubilized and dispersed;
iii) solubilizing and dispersing said predetermined weight amount of the at least one substance in the beverage;
**characterized in that** said step iii) is performed by preparing the predetermined weight amount of said at least one substance inside at least one container element (10) and keeping said at least one container element (10) immersed in the beverage, said at least one container element (10) comprising walls (12) which delimit an internal cavity (14) and have pores with predetermined sizes designed to allow the passage of said at least one solubilized substance from said internal cavity (14) into the volume of the beverage.

2. Method according to the preceding claim, **characterized in that** the walls (12) of said at least one container element (10) are made with a material chosen from the group comprising felt, polymer materials, fabrics and sintered metals.

3. Method according to the preceding claim, **characterized in that** said polymer materials are chosen within the group comprising polypropylene, polyester, polyethersulfone and nylon.

4. Method according to Claim 2, **characterized in that** the walls (12) of said at least one container element (10) are made with a sintered metal membrane.

5. Method according to any one of the preceding claims, **characterized in that** the size of the pores ranges between 0.1 µm and 100 µm and preferably between 1 µm and 20 µm.

6. Method according to any one of the preceding claims, **characterized in that** said at least one substance is chosen from the group comprising ammonium salts, yeast autolysates, tannins and vegetable polysaccharides.

7. Method according to any one of the preceding claims, **characterized in that** said at least one container element (10) is fastened to a support whilst being kept immersed in the beverage.

8. Method according to any one of the preceding claims, **characterized in that** the method involves a step of hydrating said at least one substance before said step ii).

9. Method according to any one of the preceding claims, **characterized in that** the method comprises a step of selecting the pore sizes and/or the material of the walls (12) of said at least one container element (10) depending on the type and particle size of the substance to be solubilized and/or the temperature of the beverage and/or the volume of the beverage and/or the dispersion and release time of said at least one substance in the beverage.

10. Method according to any one of the preceding claims, **characterized in that** said at least one container element (10) consists of a closable bag with a series of stitches along three sides (16) and an opening (18) formed on one side for introducing and preparing said at least one substance inside the internal cavity (14).

11. Method according to any one of Claims 1-9, **characterized in that** said at leas one container element (10) is formed by a bag provided with respective electro-welds or stitches (28) along the longitudinal edges.

12. Method according to any one of the preceding claims, **characterized in that** said beverage consists of must or wine.
